# EUROPÄISCHE PATENTANMELDUNG

(11) **EP 2 993 036 A1**
(43) Veröffentlichungstag der Anmeldung: **09.03.2016**
(21) Anmeldenummer: 15002627.6
(22) Anmeldetag: 08.09.2015
(51) Int. Cl.: B32B 7/12, B32B 27/08, B32B 27/10, B32B 27/30, B32B 27/32, B32B 27/34, B32B 27/36

(54) **VERPACKUNGSFOLIE UND VERFAHREN ZUM VERPACKEN**

(30) Priorität: 08.09.2014 DE 102014013827
(71) Anmelder: Wipak Walsrode GmbH & Co. KG, 29699 Bomlitz (DE)
(72) Erfinder: Sperlich, Bernd, DE - 29664 Walsrode (DE); Nelke-Bruhn, Dorit, DE - 17255 Wesenberg (DE); Fischer, Laura, DE - 31582 Nienburg (Weser) (DE); Kaeding-Koppers, Annett, DE - 29683 Bad Fallingbostel (DE)
(74) Vertreter: Rehmann, Thorsten

(57) **Zusammenfassung**

Die Erfindung betrifft eine Verpackungsfolie zum Verpacken von zu sterilisierenden Produkten, insbesondere Lebensmitteln, wobei die Verpackungsfolie
- eine Gasbarriereschicht und
- eine Siegelschicht aufweist,
wobei die Gasbarriereschicht wenigstens drei Lagen mit zwei Außenlagen aus einem Polyamid (PA) und einer zwischen den Außenlagen angeordneten Mittelschicht aus Ethylen-Vinylalkohol-Copolymer (EVOH) aufweist, die koextrudiert sind, gekennzeichnet dadurch, dass die Gasbarriereschicht monoaxial gereckt ist.

Die Erfindung betrifft ferner ein Verfahren und ein verpacktes Produkt.

## Beschreibung

Die Erfindung betrifft eine Verpackungsfolie zum Verpacken von zu sterilisierenden Produkten, insbesondere Lebensmitteln, wobei die Verpackungsfolie eine Gasbarriereschicht und eine Siegelschicht aufweist, wobei die Gasbarriereschicht wenigstens drei Lagen mit zwei Außenanlagen aus einem Polyamid (PA) und einer zwischen den Außenanlagen angeordneten Mittellage aus Ethylen-Vinylalkohol-Copolymer (EVOH) aufweist, die koextrudiert sind. Die Erfindung betrifft zudem ein Verfahren zum Verpacken von Produkten, insbesondere Lebensmittel sowie in einer Verpackung verpackte Produkte.

Eine derartige Verpackungsfolie ist beispielsweise aus der DE 602 12 816 T2 bekannt. Darin wird eine sterilisierbare Mehrschichtfolie beschrieben, die neben den drei Schichten der Gasbarriereschicht auf der Innen- und der Außenseite weitere Schichten, insbesondere aus Polypropylen, aufweist. Diese werden über Haftvermittler an den genannten Schichten der Gasbarriereschicht angeordnet und bilden die Siegelschicht. Bei der in der DE 602 12 816 T2 beschriebenen Verpackungsfolie wird als vorteilhaft angesehen, dass sie in einem einzigen Verfahrensschritt herstellbar ist, da sämtliche Schichten koextrudiert sind. Die beschriebene Folie baut auf einer aus der EP 0 322 891 A2 bekannten Folie auf, die jedoch lediglich eine Lage aus Ethylen-Vinylalkohol-Copolymer und eine daran angeordnete Polyamidschicht aufweist.

Derartige Folien können beispielsweise als Deckel- oder Beutelfolie, als Schlauchbeutel oder Standbodenbeutel verwendet werden. Als Deckelfolie wird sie insbesondere auf aus dem Stand der Technik bekannten Tiefziehanlagen oder Schalenverschlussanlagen verwendet, wobei die Folie auf den thermogeformten oder vorgefertigten Schalen, in denen sich das zu verpackende Produkt befindet, aufgesiegelt wird. Dies geschieht über die Siegelschicht der Verpackungsfolie und der Schale.

Als Beutelfolie kann die Folie auf allen aus dem Stand der Technik gängigen und bekannten Form-Füll-Siegel-Maschinen (FFS) verarbeitet werden. Dabei wird die Folie ggf. in mehreren Folienbahnen durch entsprechende Vorrichtungen an den Abpackmaschinen zum gewünschten Beutel geformt, bevor ggf. bereits Teilstücke gesiegelt werden. Anschließend wird das Füllgut eingefüllt und der Beutel abschließend vollständig versiegelt.

In anderen Anwendungsformen können die Beutel aus den hier beschriebenen Verpackungsfolien z.B. als Standbodenbeutel auf separaten Maschinen vorgefertigt werden, sodass diese vorgefertigten Beutel anschließend mit dem Füllgut befüllt werden, bevor die Füllöffnung versiegelt wird. In all diesen Anwendungen können die hier beschriebenen und erfindungsgemäßen Verpackungsfolien zum Einsatz kommen.

Heute werden eine Vielzahl unterschiedlicher Produkte in einer Verpackung verpackt und darin sterilisiert. Diese Produkte sind beispielsweise aber nicht ausschließlich Lebensmittel, Babynahrung, Tiernahrung, pharmazeutische oder Sanitätsprodukte sowie medizinische Instrumente. Eine zum Verpacken verwendete Verpackungsfolie verfügt dabei heute über wenigstens eine Gasbarriereschicht und eine Siegelschicht. Die Siegelschicht liegt dabei auf der dem Produkt zugewandten Seite und wird zum Verschließen und Versiegeln der jeweiligen Verpackung verwendet. Dazu wird sie beispielsweise auf eine erhöhte Temperatur gebracht und mit einem erhöhten Druck beaufschlagt, was zu einer Versiegelung der Verpackung führt. Anschließend wird das zu sterilisierende Produkt in der Verpackung sterilisiert. Zur Versiegelung können auch andere Verfahren, wie beispielsweise das Ultraschallsiegeln, verwendet werden.

Um die Sterilität im Innern der Verpackung möglichst lange aufrechterhalten zu können, müssen eine Reihe von Anforderungen durch die unterschiedlichen Schichten der Verpackungsfolie erfüllt werden. Für die Siegelschicht ist es beispielsweise unerlässlich, sterilisationsfest zu sein. Dies bedeutet insbesondere, dass sie beim späteren Sterilisieren nicht aufweicht oder gar anschmilzt, da in diesem Fall die Versiegelung der Verpackung, die durch die Siegelschicht hervorgerufen wird, zerstört werden könnte. Gleichzeitig sollte die Siegelschicht unter den gegebenenfalls erhöhten Temperaturen beim Sterilisieren stabil sein. Insbesondere darf keine Migration niedermolekularer Bestandteile aus der Folie in den Innenraum, und damit in das Produkt, der Verpackung dringen, was insbesondere für verpackte Lebensmittel gegebenenfalls unzulässig, zumindest jedoch unerwünscht wäre.

Die Gasbarriereschicht hingegen muss einen Gasaustausch zwischen dem Innenraum der Verpackung, in dem sich das Produkt befindet, und dem Außenraum möglichst lange möglichst vollständig unterbinden. Dazu ist auch über einen längeren Zeitraum eine strukturelle Integrität der Folie nötig.

Aus dem Stand der Technik sind eine Reihe unterschiedlicher Verpackungsfolien zum Verpacken von zu sterilisierenden Produkten bekannt. Aus der EP 0 363 540 beispielsweise ist ein Folienaufbau bekannt, bei dem die Siegelschicht aus Polypropylen und die Gasbarriereschicht aus einer Aluminiumfolie besteht. Als Außenschicht wird ein biaxial orientierter Polyester verwendet. Aluminiumfolie weist eine sehr gute Gasdichtigkeit auf, so dass es als Gasbarriereschicht geeignet ist.

Verpackungsfolien sind jedoch während ihrer Nutzung erheblichen mechanischen Belastungen ausgesetzt, so werden sie beispielsweise während des Verpackungsprozesses oder beim Transport gedrückt, geknickt, verbogen und auf sonstige Weisen verformt. Dies führt zu erheblichen mechanischen Belastungen, die jedoch nicht dazu führen dürfen, dass die Gasdichtigkeit der Gasbarriereschicht nennenswert abnimmt. Die Verwendung von Aluminiumfolie als Gasbarriereschicht führt jedoch dazu, dass die Gasdichtigkeit unter mechanischer Belastung, die sogenannte Knickbruchbeständigkeit oder "flex-crack-Beständigkeit" gegebenenfalls nur unzureichend ist. Hinzukommt, dass die Aluminiumfolie nicht für sichtbares Licht transparent ausgebildet ist, so dass beispielsweise Verbraucher, die das verpackte Produkt kaufen sollen, keinen Blick auf das Produkt werfen können. Dies wird ebenfalls als nachteilig empfunden. Zudem können Aluminiumfolien unterhalb einer gewissen Dicke, beispielsweise von 25 µm, aufgrund ihres Herstellungsprozesses sogenannte "pinholes", also kleine Löcher, aufweisen, durch die die Gasdichtigkeit naturgemäß beeinträchtigt wird.

Aus der EP 1 231 053 A1 ist deswegen bekannt, als Gasbarriereschicht eine metallisierte Polyesterschicht zu verwenden. Diese ist für sichtbares Licht ebenfalls nicht transparent, weist jedoch eine bessere, aber eine gegebenenfalls ebenfalls unzureichende Knickbruchbeständigkeit auf. Hinzukommt, dass zum Herstellen eines metallisierten Polyesters zunächst eine Polyesterschicht hergestellt werden muss, die anschließend in einem aufwendigen Verfahren metallisiert wird. Eine derartige Folie ist somit in der Herstellung aufwendig, jedoch kostengünstiger als eine reine Aluminiumschicht, die weiterverarbeitet wird.

Dem Fachmann sind auch andere transparente Barrierematerialien bekannt. Hierunter fallen beispielsweise Siliziumoxid-Beschichtungen (SiOx), Metalloxidbedampfungen, wie beispielsweise Aluminiumoxid (AlOx) oder Polymerbeschichtungen. Diese weisen jedoch alle eine gewisse Anfälligkeit bei mechanischen Belastungen auf.

Ein weiteres bekanntes Barrierematerial für flexible Folienverpackungen ist Ethylen-Vinylalkohol-Copolymer (EVOH). Dieses thermoplastische flexible Material weist eine hohe Knickbruch-Beständigkeit auf. Die Verwendung als Gasbarriereschicht wird beispielsweise in der EP 0 132 565 A2 beschrieben, wobei die EVOH-Schicht auf wenigstens einer Seite von einer Schicht aus einem Polyamid bedeckt ist. Diese Schichtkombination wird in wenigstens eine Richtung gereckt. Dabei verlängert sich die Schicht in der jeweiligen Reckrichtung um einen Faktor von 1,5 bis 4. Dadurch werden die Gasbarriereeigenschaften der Schicht verbessert. Es hat sich jedoch gezeigt, dass die Gasdichtigkeit einer EVOH-Schicht stark abnimmt, wenn sie mit Wasser in Berührung kommt, wie dies insbesondere beim Sterilisieren von Produkten im Inneren einer Verpackung der Fall ist, so dass diese Art der Gasbarriere für Sterilisationsanwendungen als ungeeignet gilt. Es kommt in diesem Fall zum sogenannten "Retort-Schock". Damit ist gemeint, dass die Gasdichtigkeit der Gasbarriereschicht stark abnimmt, wenn sie mit Feuchtigkeit in Berührung kommt.

In einem Artikel "Change of barrier properties of high barrier laminates due to flex-crack stress" der Firma amcor, der unter www.amcor.com/ceramis online abrufbar ist, wurden die Knickbruch-Eigenschaften unterschiedlicher Schichtaufbauten verschiedener Verpackungsfolien getestet. Dabei stellte sich heraus, dass EVOH als Gasbarriereschicht, die beidseitig von einer Polyethylenschicht umgeben und auf einem PET-Träger angeordnet war, in Absolutwerten eine relativ hohe Gasdurchlässigkeit aufwies, dieser Wert jedoch durch Verformungen und mechanische Belastungen relativ nur wenig verschlechtert wurde.

Aussagen über die zeitliche Länge des "Retort-Schocks" sind dem Dokument jedoch leider nicht zu entnehmen. Zwischenzeitlich sind EVOH-Typen entwickelt worden, die als für Sterilisationsanwendungen geeignet angeboten werden. Dazu sind die Materialien so modifiziert und optimiert worden, dass sie nach der Sterilisation, bei der die coextrudierte EVOH-Schicht mit Feuchtigkeit in Berührung kommt, wieder abtrocknet, ohne dass es zu einer Delamination zur Nachbarschicht kommt und ohne dass Löcher, sogenannte Vakuolen, gebildet werden. Beides würde zu einer erheblichen Beeinträchtigung der Barriere, zu einer Eintrübung der Folie und gegebenenfalls zum Auseinanderfallen (Delaminieren) der Folie führen.

Mit derartigen sterilisationsfesten EVOH-Typen können die anfänglichen Gasbarrierewerte der entsprechenden Folie nahezu wieder erreicht werden. Dabei bleibt die Folie für sichtbares Licht transparent. Allerdings dauert das Abtrocknen relativ lange, sodass direkt nach der Sterilisation eine sehr geringe Barriere vorhanden bleibt. Dadurch kann in diesem Zeitraum vermehrt Sauerstoff in die Verpackung gelangen, sodass das verpackte Produkt ggf. früher verdirbt und die gewünschte Haltbarkeit nicht erzielt werden kann.

Dabei kann der Retort-Schock mehrere Tage andauern. Dies ist insbesondere für haltbar gemachte Lebensmittel, die in der Verpackung enthalten sind, aber auch für medizinische Geräte oftmals nicht ausreichend, da in dieser Zeit ein gegebenenfalls reger Gasaustausch zwischen dem Innenraum der Verpackung und der Umgebung stattfinden kann.

Aus der JP H04 107138 A ist es bekannt, die Kombination aus EVOH- und PA-Folie zusätzlich mit einer Schicht aus Siliziumoxid zu versehen. Diese Art des Schichtaufbaus führt jedoch wieder zu einer Absenkung der Beständigkeit gegen mechanische Belastungen und damit zu einem Absenken der "flex-crack-Beständigkeit". Zudem ist auch diese Art der Beschichtung kostenaufwändig.

Um den Retort-Schock zu vermeiden oder zumindest abzuschwächen ist daher im Stand der Technik versucht worden, zu verhindern, dass die EVOH-Schicht beim Sterilisieren mit Feuchtigkeit in Berührung kommt. Dafür wurden statt der umgebenden Polyamidschichten Schichten aus Polypropylen (PP) verwendet, die eine hohe Barriere gegen Feuchtigkeit aufweisen. Die Feuchtigkeit, die jedoch durch die Polypropylenschicht eindringt und mit dem EVOH in Kontakt kommt, kann durch die Wasserdichtigkeit der umgebenen Polypropylenschichten nur sehr schwer die EVOH-Schicht wieder verlassen, so dass dieser Schichtaufbau zu einem Retort-Schock führt, der zwar eine abgeminderte Stärke aufweist, dessen zeitliche Dauer jedoch auf bis zu 14 Tage verlängert wurde. Um diese Zeit zu verkürzen, muss stattdessen die Schichtdicke der Polypropylenschichten so weit erhöht werden, dass derartige Schichtaufbauten nur noch für standfeste Behälter, beispielsweise von Fertigmahlzeiten, verwendet werden können.

Je dicker die Polypropylenschichten gewählt werden, desto geringer fällt der Retort-Schock aus. Versuche haben gezeigt, dass Folienaufbauten, bei denen die zentrale EVOH-Schicht über Haftvermittler auf beiden Seiten mit einer Polypropylenschicht beschichtet wird, deren Dicke jeweils wenigstens 200 µm aufweist, den Retort-Schock nahezu vollständig unterbinden können. Die Gesamtdicke derartiger Folien liegt jedoch bei beispielsweise 500 µm oder mehr, sodass diese Folien für flexible Deckel oder Beutel nicht einsetzbar sind. Derartige Folienkombinationen können beispielsweise als tiefgezogene standfeste Schalen beispielsweise für Fertiggerichte eingesetzt werden. Der gleiche Schichtaufbau mit dünneren Polypropylenschichten, sodass die entsprechende Folie für flexible Deckel oder Beutel einsetzbar bleibt, führt nicht zu einem ausreichenden Schutz der EVOH-Schicht vor Feuchtigkeit bei der Sterilisation.

Der Erfindung liegt daher die Aufgabe zugrunde, eine Verpackungsfolie vorzuschlagen, die eine hohe Gasdichtigkeit und gute Knickbruch-Beständigkeit aufweist, transparent ist und in geringer Dicke herstellbar ist und die trotzdem bei der Sterilisation von verpackten Produkten verwendet werden kann.

Die Erfindung löst die gestellte Aufgabe durch eine Verpackungsfolie zum Verpacken von zu sterilisierenden Produkten, insbesondere Lebensmitteln, wobei die Verpackungsfolie eine Gasbarriereschicht und eine Siegelschicht aufweist, und wobei sich die Verpackungsfolie dadurch auszeichnet, dass die Gasbarriereschicht monoaxial gereckt ist und wenigstens drei Lagen mit zwei Außenlagen aus einem Polyamid (PA) und einer zwischen den Außenlagen angeordneten Mittellage aus Ethylen-Vinylalkohol-Copolymer (EVOH) aufweist, die koextrudiert sind.

Der Erfindung liegt die überraschende Erkenntnis zugrunde, dass der bereits bekannte Aufbau aus PA/EVOH/PA, der bisher für Sterilisationsanwendungen aufgrund des großen Retort-Schockes als ungeeignet galt, verwendet werden kann, wenn die Gasbarriereschicht monoaxial gereckt wird. Vorzugsweise bildet die Gasbarriereschicht die vom Produkt abgewandte Außenseite der Verpackungsfolie oder ist lediglich von Schichten abgedeckt, die eine große Wasserdampfdurchlässigkeit, vorzugsweise wenigstens so gut wie die der PA-Lage, aufweisen. Versuche haben ergeben, dass auf diese Weise der Retort-Schock auf eine Dauer von 4 Stunden eingeschränkt werden konnte. Das bedeutet, dass nach 4 Stunden die ursprüngliche Gasbarriere wieder vollständig oder zumindest nahezu wieder hergestellt ist.

Als besonders vorteilhaft hat sich dabei herausgestellt, wenn die Gasbarriereschicht monoaxial in einem Reckverhältnis von 1,5:1 bis 4:1, bevorzugt in einem Reckverhältnis von 2:1 bis 3,5:1, besonders bevorzugt in einem Reckverhältnis von 3:1 gereckt wird. Dies bedeutet, dass die Länge der Gasbarriereschicht in Reckrichtung um den genannten Faktor verlängert wird.

In der erfindungsgemäßen Verpackungsfolie, die für Sterilisationsanwendungen geeignet und vorgesehen ist, verbinden sich somit die hohe Knickbruch-Beständigkeit und die hohe Gasbarriere der erfindungsgemäßen Gasbarriereschicht mit der gewünschten Transparenz für sichtbares Licht und einer sehr geringen zeitlichen Dauer des Retort-Schocks. Hinzu kommt, dass keine Beschichtungen oder Bedampfungen von beispielsweise Polyesterschichten mit Siliziumoxid, Metalloxid oder Metallbedampfungen vorgenommen werden müssen, so dass die erfindungsgemäße Verpackungsfolie zudem kostengünstig herstellbar ist.

Die Siegelschicht besteht bevorzugt aus einem heißsiegelfähigen thermoplastischen Olefin-Homo- oder Copolymer und ist gegebenenfalls mehrlagig ausgestaltet. Das Material ist beispielsweise ausgewählt aus einem Material der Gruppe Ethylen-Homopolymer, Ethylen/α-Olefin-Copoylmer, Propylen-Homopolymer und Propylen/α-Olefin-Copoylmer. Als Materialien der Siegelschicht können vorzugsweise auch Copolyester eingesetzt werden. Der Copolyester der Siegelschicht besteht vorteilhafterweise aus einer Dicarbonsäure und einem Diol, wobei der Copolyester als Diol-Komponente eine Mischung aus 10 bis 50 mol% wenigstens eines cycloaliphatischen (C₆-C₁₅)-Diols und 90 bis 50 mol% eines linearen aliphatischen (C₂-C₁₀)-Diols und als Dicarbonsäurekomponente Terephthalsäure oder eine Mischung aus 50 bis 90 mol% Terephthalsäure und 10 bis 50 mol% Isophthalsäure und/oder wenigstens einer aliphatischen (C₆-C₁₂)-Dicarbonsäure aufweist. Die Siegelschicht kann nach allen gängigen Produktionsverfahren hergestellt werden, sodass insbesondere auch Extrusions- oder Coextrusionsverfahren möglich sind. Hierbei können Blasfolien-Extrusion oder Flachfolien-Extrusion verwendet werden.

In einer bevorzugten Ausgestaltung besteht die Siegelschicht zumindest teilweise aus Polypropylen (PP) insbesondere aus gegossenem Polypropylen. Die Gasbarriereschicht und die Siegelschicht können dabei in einem aus dem Stand der Technik an sich bekannten Verfahren mit einem Kaschierklebstoff aufeinander aufgeklebt werden.

Als vorteilhaft hat sich herausgestellt wenn die Siegelschicht mehrlagig ist aus wenigstens einer Lage aus Polypropylen (PP) und wenigstens einer Lage aus Polyamid (PA) besteht, die koextrudiert sind und mittels eines Haftvermittlers verbunden sind. Als besonders vorteilhaft hat sich herausgestellt, wenn die Siegelschicht aus wenigstens zwei Lagen Polyamid (PA) und wenigstens zwei Lagen Polypropylen (PP) besteht, die koextrudiert und abwechselnd angeordnet sind und mittels eines Haftvermittlers verbunden sind. Die Siegelschicht aus Lagen aus Polypropylen und Lagen aus Polyamid kann nahezu unabhängig von der jeweiligen Anzahl der jeweiligen Lagen in einem einzigen Koextrusionsverfahrensschritt hergestellt werden. Zum Herstellen einer vollständigen Verpackungsfolie ist es daher nur nötig, die Siegelschicht und die Gasbarriereschicht als separate Folien in jeweils einem Koextrusionsverfahrensschritt oder einen Koextrusionsverfahrensschritt mit anschließender monoaxialer Reckung herzustellen. und diese in herkömmlicher Weise aneinander zu kaschieren. Der Herstellungsprozess einer derartigen Folie ist daher einfach, schnell und kostengünstig und zudem gut beherrschbar. Durch die unterschiedlichen Anzahlen von Lagen in der Siegelschicht kann die mechanische Festigkeit der Verpackungsfolie eingestellt werden. Damit kann auf das jeweils zu verpackende Produkt eingegangen werden und beispielsweise eine Durchstoßfestigkeit oder die allgemeine mechanische Festigkeit erhöht werden.

Die Gasbarriereschicht einer erfindungsgemäßen Verpackungsfolie, die den wenigstens dreischichtigen Aufbau zweier Polyamid-Außenlagen und einer Ethylen-Vinylalkohol-Copolymer-Mittellage aufweist, kann über gängige Extrusionsverfahren produziert werden. Dabei wird eine Flachfolien-Extrusion bevorzugt. Die drei Schichten werden gemeinsam koextrudiert und anschließend in Laufrichtung gereckt. Als Polyamid für eine derartige Mehrlagefolie eignen sich insbesondere Homo- und/oder Copolyamide, die vorzugsweise ausgewählt sind aus der Gruppe umfassend thermoplastische aliphatische, teilaromatische und aromatische Homo- und Copolyamide. Diese können aus aliphatischen und/oder cycloaliphatischen Diaminen mit 2 bis 10 Kohlenstoffatomen, wie Hexamethylendiamin und/oder aromatischen Diaminen mit 6 bis 10 Kohlenstoffatomen, wie p-Phenylendiamin, und aus aliphatischen und/oder aromatischen Dicarbonsäuren mit 6 bis 14 Kohlenstoffatomen, wie beispielsweise Adipinsäure, Terephthalsäure oder Isoterephthalsäure aufgebaut sein. Weiterhin können diese Homo- und Copolyamide aus Lactamen mit 4 bis 10 Kohlenstoffatomen, wie z.B. aus ε-Caprolactam, hergestellt werden. Bei einer erfindungsgemäßen Verpackungsfolie zum Einsatz kommende Homo- und/oder Copolyamide sind vorzugsweise ausgewählt aus der Gruppe umfassend PA 6, PA 12, PA 66, PA 6I, PA 6T, entsprechende Copolymere und Mischungen aus wenigstens zwei der genannten Polymere. Als aromatisches Polyamid kann auch meta-Xylylendiamin verwendet werden.

Die EVOH-Lage kann vorteilhafterweise aus modifizierten Ethylen-Vinylalkohol-Copolymeren bestehen. Derartige sterilisationsbeständige EVOH-Materialien sind beispielsweise aus der EP 0 322 891 bekannt.

Die Gasbarriereschicht und die Siegelschicht werden vorteilhafterweise über Kaschierklebstoffe gegeneinander kaschiert, d.h. mit einer Schicht aus Kaschierklebstoff miteinander verbunden. Als Kaschierklebstoff kann ein in der Folienverbundtechnik üblicher Klebstoff verwendet werden, der für Sterilisationsanwendungen geeignet ist. Vorteilhafterweise ist dies ein Zweikomponenten-Polyurethanklebstoff. Der Klebstoff wird auch entsprechend der zu verbindenden Materialien ausgewählt, wobei auch Einkomponentensysteme und Dispersionsklebstoffe in Frage kommen können. Die meisten in der Folienverbundtechnik üblicherweise verwendeten Kaschierklebstoffe sind bereits transparent, sodass auch der Kaschierklebstoff an der für sichtbares Licht gewünschten Transparenz der Verpackungsfolie nichts ändert. Die Kaschierung erfolgt vorteilhafterweise mit einem Klebstoffauftragsgewicht von 2 bis 8 g/m². In anderen Ausführungsformen können die einzelnen Folien auch über andere bekannte Produktionsverfahren, wie beispielsweise die Extrusionskaschierung oder die Extrusionsbeschichtung miteinander verbunden werden.

Auch wenn die eigentliche Gasbarriere und Gasdichtigkeit bei dem erfindungsgemäßen Folienaufbau hauptsächlich, vollständig oder zumindest nahezu vollständig von der EVOH-Lage erreicht wird, sodass genau genommen lediglich diese die Gasbarriereschicht bildet, wird vorliegend der dreischichtige Aufbau aus EVOH-Lage und zwei angrenzenden Polyamidlagen als Gasbarriereschicht angesehen. Alternativ dazu könnte dies auch als Gasbarrierefolie bezeichnet werden.

Vorzugsweise umfasst die Verpackungsfolie zusätzlich eine Trägerschicht. Auch diese Trägerschicht kann in herkömmlicher Weise hergestellt und mit der Siegelschicht und/oder der Gasbarriereschicht verbunden werden, um die mechanische Festigkeit und Stabilität der Verpackungsfolie zu verändern und zu erhöhen und insbesondere auf das zu verpackende Produkt einzustellen.

Als Trägerschicht kann vorteilhafterweise biaxial orientiertes Polyamid (BOPA), biaxial orientierter Polyester (BOPET) oder biaxial orientiertes Polypropylen (BOPP) verwendet werden. Weitere Materialien, die als Trägerschicht verwendet werden können, sind thermoplastische Kunststoffe, wie beispielsweise ein Polyolefin, vorzugsweise Polyethylen, Polypropylen oder deren Copolymere, ein Polyester, besonders bevorzugt aliphatische oder aromatische Polyester, wie beispielsweise Polyethylenterephtalat, oder ein Polyamid, besonders bevorzugt aliphatische, teilaromatische oder aromatische Polyamide, vorzugsweise PA 6. Bevorzugt sind transparente Materialien, um eine insgesamt transparente Verpackungsfolie erhalten zu können. Die Trägerschichten können monoaxial, insbesondere in Längsrichtung, oder biaxial gereckt sein, um entsprechende physikalische Eigenschaften, wie beispielsweise die benötigte Festigkeit, zu erreichen. Die Dicke der zusätzlichen Trägerschicht beträgt vorteilhafterweise wenigstens 12 µm.

Alternativ oder zusätzlich dazu kann auch eine Trägerschicht aus einem Papier, das gegebenenfalls beschichtet oder imprägniert ist, verwendet werden. Wird als Trägerschicht beispielsweise biaxial ortientiertes Polyamid (BOPA) verwendet, führt dies zu einer erhöhten Durchstichfestigkeit der Verpackungsfolie, was insbesondere für spitze oder scharfkantige Produkte, die es zu verpacken gilt, von Vorteil ist. Die Verwendung einer Trägerschicht aus Papier trägt insbesondere dem Umweltschutzgedanken Rechnung, da auf diese Weise die Menge des für die Verpackungsfolie benötigten Kunststoffes, der aus fossilen Ressourcen gewonnen wird, reduziert und zumindest teilweise durch einen nachwachsenden Rohstoff, wie Papier, ersetzt werden kann.

Die Trägerschicht ist vorteilhafterweise zwischen der Gasbarriereschicht und der Siegelschicht oder an einer der Siegelschicht abgewandten Seite der Gasbarriereschicht angeordnet. Es hat sich als vorteilhaft herausgestellt, wenn die Gasbarriereschicht an der Außenseite der Verpackungsfolie, also der zu dem verpackenden Produkt abgewandten Seite angeordnet ist. Auf diese Weise kann Feuchtigkeit, die beim Sterilisieren des verpackten Produktes mit der Gasbarriereschicht in Kontakt kommt, diese Gasbarriereschicht nach außen leicht verlassen und die Gasbarriereschicht auf diese Weise leicht trocknen. Dies hat eine Verkürzung und Verringerung des Retort-Schockes zur Folge, da die Zeit, die die EVOH-Lage mit Feuchtigkeit in Berührung kommt und die Menge des Wassers, die mit der EVOH-Lage in Kontakt kommt, reduziert wird. Bei einer erfindungsgemäßen Verpackungsfolie wird zudem eine aus dem Stand der Technik bekannte Eintrübung oder Weißfärbung der EVOH-Lage aufgrund des Kontaktes zum Wasser vermieden. Eine derartige Verfärbung der ansonsten transparenten Gasbarriereschicht ist beim Verbraucher, der das verpackte Produkt kaufen soll, unerwünscht und daher zu vermeiden.

Insbesondere für den Fall, dass Trägermaterialien verwendet werden, die eine hohe Wasserdampfdurchlässigkeit aufweisen, beispielsweise Papier, können diese auch außenliegend angebracht sein, um die Haptik einer Verpackung aus der Verpackungsfolie zu verbessern. So ist es beispielsweise möglich, eine Papier-Trägerschicht zu verwenden, die Fenster beinhaltet, um den Blick auf das zu verpackende bzw. verpackte Produkt zu gewährleisten. Unter einer hohen Wasserdampfdurchlässigkeit wird vorliegend insbesondere verstanden, dass das Trägermaterial der Trägerschicht eine wenigstens so hohe Wasserdampfdurchlässigkeit wie die Polyamidlage aufweist, die an der EVOH-Lage angeordnet ist.

Vorteilhafterweise beträgt die Wasserdampfdurchlässigkeit der Schichten, die die Gasbarriereschicht abdecken wenigstens 75 g/(m² d), also Gramm pro Quadratmeter und Tag. Besonders bevorzugt beträgt sie wenigstens 250 g/(m² d) und besonders bevorzugt wenigstens 400 g/(m² d). Die Wasserdampfdurchlässigkeit ist dabei gemessen worden bei 23°C und 85 % relativer Feuchte. Die Messung kann beispielsweise nach den Normen DIN 53122 oder verwandten Normen erfolgen.

Wird die Trägerschicht an der Siegelschicht abgewandten Seite der Gasbarriereschicht angeordnet, wird durch die Trägerschicht die Haptik der Verpackungsfolie verändert. Dies ist insbesondere bei der Verwendung einer Trägerschicht aus Papier von Vorteil, da auf diese Weise dem Kunden, der das verpackte Produkt in die Hand nimmt, sofort mitgeteilt wird, dass er ein umweltfreundliches Produkt in der Hand hält. Würde die Trägerschicht aus Papier zwischen der Gasbarriereschicht und der Siegelschicht angeordnet, würde nur der optische Eindruck einer Papierschicht erweckt, ohne dass der Kunde oder der Verbraucher eine Möglichkeit hat, auf andere Weise festzustellen, ob tatsächlich Papier verwendet wurde, oder ob lediglich die Optik einer Papierschicht nachgebildet wurde.

Insbesondere wenn als Siegelschicht eine Kombination mehrerer Lagen aus Polyamid und aus Polypropylen verwendet wird, kann die Verwendung einer zusätzlichen separaten Trägerschicht überflüssig sein, so dass in diesem Fall das Herstellungsverfahren der Verpackungsfolie weiter vereinfacht und beschleunigt wird.

Bei einer Verpackungsfolie gemäß einem Ausführungsbeispiel der vorliegenden Erfindung besteht die Gasbarriereschicht aus den beiden Außenlagen aus einem Polyamid, die beispielsweise eine Dicke von jeweils 3 bis 10 µm, bevorzugt 6 µm, aufweisen. Die Mittellage aus EVOH verfügt vorteilhafterweise über eine Dicke von 3 bis 12 µm, bevorzugt 8 µm. Die Dicke der Gasbarriereschicht beträgt vorzugsweise zwischen 12 und 30 µm. Mögliche Stärken für eine zusätzliche Trägerschicht liegen im Bereich von 12 bis 50 µm, bei der Verwendung einer Papierschicht zwischen 20 und 70 g/m². Versuche wurden durchgeführt mit einer Trägerschicht aus biaxial orientiertem Polyester mit einer Stärke von 12 µm und biaxial orientiertem Polyamid mit einer Stärke von 15 µm. Die Dicke der Siegelschicht beträgt vorteilhafterweise zwischen 30 und 120 µm, vorzugsweise zwischen 50 und 75 µm.

Alle hier beschriebenen Verpackungsfolien können auf unterschiedlichste Weise bedruckt werden. Insbesondere der Druck auf der Gasbarriereschicht oder der Trägerschicht ist möglich und gegebenenfalls sinnvoll. Auch auf die Siegelschicht kann zumindest theoretisch gedruckt werden. Dabei kann der Druck frontal, also von der Vorderseite, oder gekontert, also von der Rückseite, auf die jeweilige Schicht oder die Folie aufgebracht werden. Auf diese Weise ist es möglich, den Druck zwischen zwei Schichten der Verpackungsfolie aufzubringen. Dieses wird bevorzugt durchgeführt, da so die Farben beispielsweise gegen Abrieb geschützt sind. Die Farben, die zum Drucken verwendet werden, werden entsprechend des ausgewählten Druckverfahrens ausgewählt und sind Sterilisationsbeständig, um die Sterilisationsbeständigkeit der Verpackungsfolie nicht zu gefährden. Verwendbar sind nahezu alle dem Fachmann aus dem Stand der Technik bekannten Druckverfahren, wie zum Beispiel der Tiefdruck, der Flexodruck oder der Digitaldruck. Insbesondere für den Fall, dass auf eine Papierschicht gedruckt werden soll, ist naturgemäß der Druck auf die Rückseite der jeweiligen Schicht nicht sinnvoll, da diese Papierschicht nicht transparent ist. Wird auf eine für sichtbares Licht nicht transparente Schicht aufgedruckt, erfolgt der Druck vorteilhafterweise von der Vorderseite aus.

Die Erfindung löst die gestellte Aufgabe zudem durch ein Verfahren zum Verpacken von Produkten, insbesondere Lebensmitteln wobei das Verfahren folgende Schritte aufweist:
a) Anordnen des Produktes in einer Verpackung, die zumindest teilweise aus einer Verpackungsfolie gemäß einem Ausführungsbeispiel der vorliegenden Erfindung besteht;
b) Versiegeln der Verpackung durch Erhöhen der Temperatur und/oder Ausüben eines Druckes auf zumindest einen Teil der Verpackungsfolie;
c) Sterilisieren des Produktes in der versiegelten Verpackung.

Vorteilhafterweise wird das Produkt zum Sterilisieren für eine Dauer von wenigstens 10 Minuten, bevorzugt wenigstens 30 Minuten, besonders bevorzugt wenigstens 60 Minuten auf wenigstens 100°C, bevorzugt wenigstens 120°C, besonders bevorzugt wenigstens 130°C erwärmt. Allgemein wird hier unter einer Sterilisation ein Verfahren insbesondere zur Haltbarmachung von Lebensmitteln verstanden, bei dem das zu sterilisierende Produkt 10 bis 60 Minuten in Gegenwart von Wasser, Dampf oder unter Druck stehendem Dampf auf über 100 °C, bevorzugt auf 110 °C bis 135 °C erhitzt wird.

Die Erfindung löst die gestellte Aufgabe zudem durch ein in einer Verpackung verpacktes Produkt, wobei die Verpackung zumindest teilweise aus einer Verpackungsfolie nach einem Ausführungsbeispiel der vorliegenden Erfindung besteht und das Produkt in der Verpackung sterilisiert wurde.

An erfindungsgemäßen Folien werden Versuche zur Messung der Sauerstoffdurchlässigkeit mit einem Ox-tran-2/60 der Firma Mocon Industries durchgeführt. Diese erfolgen bei 23 °C und 50 % relativer Luftfeuchte gemäß DIN 53380-3.

Zur Messung der Knickbruch-Beständigkeit wird ein Gelbo-Flex-Tester, Modell GB der Firma BETEX-Dürbusch, aus Hennef, Deutschland, verwendet. Dabei werden die Einstellungen für die Materialklasse 1 (152 mm Hub; 440° Verdrehwinkel) und die Schablone 189 x 280 mm gewählt. Das Gelbo-Flex-Gerät staucht den zu einem 189 mm langen Zylinder gerollten Probenzuschnitt der zu testenden Verpackungsfolie auf 40 mm zusammen, wobei gleichzeitig eine Zylinderseite um 440° gedreht wird. Konstruktiv ist dabei gewährleistet, dass dabei ein annähernd zugspannungsfreier Drehzwirbel mit vielen ungeordnet verlaufenden Knicken gebildet wird. Bei den vorliegenden Tests werden jeweils 50 Zyklen durchgeführt. Die Auswirkungen des Gelbo-Flex-Tests werden anhand von Messungen zur Sauerstoffdurchlässigkeit bestimmt, indem unbeanspruchte und beanspruchte Folien gleichen Folienaufbaus verglichen werden. Die Sauerstoffdurchlässigkeit wird dabei in Kubikzentimeter pro Quadratmeter, bar und Tag angegeben. Liegt der Wert unter 1 cm³/(m² bar d), wird von einer ausreichenden Sauerstoffbarriere ausgegangen.

Die Tests werden anhand von vier unterschiedlichen Schichtaufbauten durchgeführt. Das verwendete Ausführungsbeispiel der erfindungsgemäßen Verpackungsfolie besteht aus einer Folie, die eine Gasbarriereschicht aufweist, deren Außenlagen 6 µm und deren Mittellage 8 µm dick ist. Die Außenlagen bestehen dabei aus einem nukleierten Polyamid 6 vermischt mit 10 % eines teilaromatischen Polyamids. Diese Gasbarriereschicht wurde monoaxial um den Faktor 3 gereckt und mit einer 75 µm starken Siegelschicht aus Polypropylen (Flachfolie) verbunden. Bei dem EVOH handelt es sich um ein sterilisationsbeständiges EVOH, dessen Ethylenanteil 29 % beträgt.

Dieses Ausführungsbeispiel der erfindungsgemäßen Verpackungsfolie wird mit drei unterschiedlichen Verpackungsfolien, die nicht erfindungsgemäß sind, verglichen. Dabei handelt es sich um jeweils 12 µm dicke Gasbarriereschichten, die ebenfalls auf einer 75 µm starken Schicht aus Polypropylen angeordnet sind. Die Gasbarriereschichten sind BOPET (AlOx bedampft), BOPET (SiOx beschichtet), Besela. Bei Besela handelt es sich dabei um einen mit modifizierter Polyacrylsäure beschichteten biaxial orientierten Polyesterfilm. Die Gesamtfoliendicke beim Ausführungsbeispiel der vorliegenden Erfindung liegt bei 95 µm, während die Vergleichsprodukte eine Gesamtschichtdicke von 87 µm aufweisen.

Vor dem Gelbo-Flex-Test ist der Wert für die Sauerstoffdurchlässigkeit bei allen betrachteten Folien kleiner als 1 cm³/(m² bar d). Nach 50 Zyklen des Gelbo-Flex-Tests gilt dies jedoch lediglich für die Folie gemäß dem Ausführungsbeispiel der vorliegenden Erfindung. Die übrigen Folien weisen Sauerstoffdurchlässigkeiten von 2 bis 15 cm³/(m² bar d) auf.

Auch für die Bestimmung der Sterilisationsfestigkeit werden Tests durchgeführt. Dabei wird die Sterilisation in einem Vollwasserautoklaven durchgeführt. Hierzu werden aus der zu testenden Folie mit Wasser gefüllte Folienbeutel gesiegelt, oder die Folie wird in einem Metallrahmen fixiert und jeweils 60 Minuten bei 130 °C sterilisiert. Nach der Sterilisation werden die Folienmuster leicht abgetrocknet und unmittelbar in das jeweilige Messgerät gespannt. Nach der Konditionierung wird die Messung gestartet und über eine Zeit von mehreren Stunden durchgeführt. Auch diese Messungen erfolgen bei 23 °C Lufttemperatur und 50 % relativer Luftfeuchte nach DIN 53380-3.

Als erstes Ausführungsbeispiel wird eine Gasbarriereschicht einer erfindungsgemäßen Folie mit 6 µm Polyamid, 8 µm EVOH und 6 µm Polyamid verwendet, die monoaxial gereckt wurde. Als Vergleichsbeispiel wird der gleiche Schichtaufbau verwendet, der jedoch biaxial gereckt wurde. Ein zweites Ausführungsbeispiel der vorliegenden Erfindung besteht aus 6 µm Polyamid, 8 µm EVOH und 6 µm Polyamid, das über einen Kaschierklebstoff auf einer 75 µm starken Polypropylenschicht (Flachfolie) angeordnet wurde. Als Vergleichsbeispiel wird ein ungerecktes Material verwendet, wie es in der DE 602 12 816 beschrieben ist. Bei beiden Ausführungsbeispielsen wird nukleiertes Polyamid 6 ein sterilisationsbeständiges EVOH mit einem Ethylenanteil von 29 % verwendet.

Die Folien gemäß einem Ausführungsbeispiel der vorliegenden Erfindung weisen vor der Sterilisation eine Sauerstoffdurchlässigkeit von kleiner als 1 cm³/(m² bar d) auf. Dies gilt auch für das ungereckte Material gemäß DE 602 12 816. Die biaxial gereckte Folie weist bereits vor der Sterilisation eine Gasdurchlässigkeit von 1,5 bis 2 cm³/(m² bar d) auf. Die Verpackungsfolien gemäß Ausführungsbeispielen der vorliegenden Erfindung, die über monoaxial gereckte Gasbarriereschichten verfügen, weisen bereits nach 4 Stunden nach der Sterilisation einen Sauerstoffdurchlässigkeitswert von unter 1 cm³/(m² bar d) auf. Bereits nach 4 Stunden ist der Retort-Schock folglich so weit abgeklungen, dass wieder eine ausreichende Sauerstoffdichtigkeit gewährleistet werden konnte. Die ansonsten identisch aufgebaute Folie, die jedoch über eine biaxial gereckte Gasbarriereschicht verfügt, weist nach 4 Stunden eine Sauerstoffdurchlässigkeit von etwa 500 cm³/(m² bar d) auf. Erst nach 115 Stunden sinkt dieser Wert auf unter 4 cm³/(m² bar d). Die ungereckte Folie gemäß DE 602 12 816 weist nach der Sterilisation eine Durchlässigkeit von über 100 cm³/(m² bar d) für Sauerstoff auf, der erst nach über 200 Stunden auf den kritischen Wert 1 cm³(m² bar d) absinkt.

Hinzu kommt, dass die biaxial gereckte Folie nach der Sterilisation und der anschließenden Trocknung weiß verfärbt ist, was vermutlich auf die Bildung von Vakuolen innerhalb der Schicht zurückzuführen ist. Eine biaxiale Reckung, die aus dem Stand der Technik für eine Erhöhung der Gasbarriereschicht bekannt ist, beansprucht das EVOH folglich so sehr, dass es für Sterilisationsanwendungen nicht mehr geeignet ist.

## Patentansprüche

1. Verpackungsfolie zum Verpacken von zu sterilisierenden Produkten, insbesondere Lebensmitteln, wobei die Verpackungsfolie
- eine Gasbarriereschicht und
- eine Siegelschicht aufweist,
wobei die Gasbarriereschicht wenigstens drei Lagen mit zwei Außenlagen aus einem Polyamid (PA) und einer zwischen den Außenlagen angeordneten Mittellage aus Ethylen-Vinylalkohol-Copolymer (EVOH) aufweist, die koextrudiert sind, **dadurch gekennzeichnet, dass** die Gasbarriereschicht monoaxial gereckt ist.

2. Verpackungsfolie nach Anspruch 1, **dadurch gekennzeichnet, dass** die Siegelschicht zumindest teilweise aus Polypropylen (PP) besteht.

3. Verpackungsfolie nach Anspruch 1 oder 2, **dadurch gekennzeichnet, dass** die Siegelschicht mehrlagig ist und aus wenigstens einer Lage aus Polypropylen (PP) und wenigstens einer Lage aus Polyamid (PA) besteht, die koextrudiert sind und mittels eines Haftvermittlers verbunden sind.

4. Verpackungsfolie nach Anspruch 3, **dadurch gekennzeichnet, dass** die Siegelschicht aus wenigstens zwei Lagen aus Polyamid (PA) und wenigstens zwei Lagen aus Polypropylen (PP) besteht, die koextrudiert und abwechselnd angeordnet sind und mittels eines Haftvermittlers verbunden sind.

5. Verpackungsfolie nach Anspruch 1 oder 2, **dadurch gekennzeichnet, dass** die Siegelschicht zumindest teilweise aus einem Copolyester besteht.

6. Verpackungsfolie nach einem der vorstehenden Ansprüche, **gekennzeichnet durch** eine zusätzliche Trägerschicht.

7. Verpackungsfolie nach Anspruch 6, **dadurch gekennzeichnet, dass** die Trägerschicht ein biaxial orientiertes Polyamid (BOPA), ein biaxial orientierter Polyester (BOPET), ein biaxial orientiertes Polypropylen (BOPP) oder ein Papier ist.

8. Verpackungsfolie nach Anspruch 6 oder 7, **dadurch gekennzeichnet, dass** die Trägerschicht zwischen der Gasbarriereschicht und der Siegelschicht oder an einer der Siegelschicht abgewandten Seite der Gasbarriereschicht angeordnet ist.

9. Verfahren zum Verpacken von Produkten, insbesondere Lebensmitteln, wobei das Verfahren folgende Schritte aufweist:
a) Anordnen des Produktes in einer Verpackung, die zumindest teilweise aus einer Verpackungsfolie nach einem der vorstehenden Ansprüche besteht,
b) Versiegeln der Verpackung durch Erhöhen der Temperatur und/oder Ausüben eines Druckes auf zumindest einen Teil der Verpackungsfolie;
c) Sterilisieren des Produktes in der versiegelten Verpackung.

10. Verfahren nach Anspruch 9, **dadurch gekennzeichnet, dass** das Produkt zum Sterilisieren für eine Dauer von wenigstens 10 Minuten, bevorzugt wenigstens 30 Minuten, besonders bevorzugt wenigstens 60 Minuten auf wenigstens 100°C, bevorzugt wenigstens 120°C, besonders bevorzugt wenigstens 130°C erwärmt wird.

11. In einer Verpackung verpacktes Produkt, insbesondere Lebensmittel, wobei die Verpackung zumindest teilweise aus einer Verpackungsfolie nach einem der Ansprüche 1 bis 8 besteht und das Produkt in der Verpackung sterilisiert wurde.
